# EUROPEAN PATENT SPECIFICATION

(11) **EP 1 683 451 B1**
(45) Date of publication and mention of the grant of the patent: **04.06.2008**
(21) Application number: 06250304.0
(22) Date of filing: 20.01.2006
(51) Int. Cl.: A47J 27/21

(54) **Liquid heating vessels having heated bases**
Wasserkocher
Bouilloire

(30) Priority: 21.01.2005 GB 0501354
(43) Date of publication of application: 26.07.2006
(73) Proprietor: STRIX LIMITED, Ronaldsway, Isle of Man IM9 2RG (GB)
(72) Inventor: Taylor, Paul Robin, Ballasalla Isle of Man IM9 2EW (GB); Scott, Michael James, Port St. Mary Isle of Man IM9 5PH (GB)
(74) Representative: Samuels, Adrian James

(56) References cited:
- EP-A- 1 314 385
- DE-A1- 19 907 133
- GB-A- 2 408 918

## Description

This invention relates to the securing of electrical heaters in the base of liquid heating vessels.

The use of electrically heated bases in domestic-type liquid heating vessels such as kettle and jugs has become all but ubiquitous. Typically a stainless steel plate having a form of electric heating element formed on or mounted to its underside is mounted to close an opening in the base of a metal, glass or, more commonly, plastics vessel body. The element is usually a sheathed heating element fitted to the underside of the plate, or a so-called thick film heater printed onto the undersurface.

The numerous reasons for the appeal of such arrangements are well known and have been well documented. The problem which must always be addressed in the design of such vessels is to attach the heater so that there is an adequate seal between the heater plate and the vessel body that will reliably prevent leakage of liquid from the vessel in spite of differing thermal expansion between the plate and the vessel body and also withstand the temperatures encountered both during normal use and under abuse conditions (e.g. where the heater is energised with insufficient liquid in the vessel). Preferably the securing arrangement should also be inexpensive to manufacture, easy and quick to assemble and not overly restrictive on the aesthetic design of the vessel.

There have been several proposals for securing arrangements. One system is disclosed in WO 99/017645 in which a planar heater is retained in a vessel by an internal or external circlip that is respectively compressed or stretched circumferentially and then released to clip into suitable slots in the vessel wall. However the need to provide a circlip which is by its nature a discontinuous ring compromises its strength. Such a system can also be fiddly to assemble.

On the other hand the Applicant's own Sure Seal system as described in WO 96/18331 has been highly successful due to its reliability and cost-effectiveness.

DE-19907133-A1 discloses a water boiling vessel comprising a base plate and a sealing ring located between the base plate and the vessel wall.

However the Applicant recognises that there may be some circumstances in which an alternative sealing system would be desirable and it is the object of the present invention to provide such an alternative.

The present invention provides a liquid heating vessel comprising a plate heater and an annular seal sealing the heater to the vessel body, said heater having a vertically extending flange and said seal having a cross-sectional profile including at least one annular channel on the radially inward surface facing the flange

In accordance with the invention a seal is provided which may provide a reliable seal between a radially outwardly facing surface of a heater plate and the inner surface of the vessel wall whilst still being sufficiently deformable to be easy to fit. Furthermore the seal will not be dislodged when the plate is assembled from below into the vessel body. This is advantageous over known arrangements in which a seal has a flat section in contact with the heater plate and radially extending fins which engage with the vessel body since it decreases the area of the seal in contact with the heater plate and thus the resistance to heat which the seal material is required to have.

Preferably the outwardly facing surface of the seal is substantially smooth - e.g. flat or only gently curved (with a radius of curvature greater than the height of the seal say). This is advantageous in facilitating insertion of the element plate and seal assembly into the vessel body since the smooth surface of the seal moves over the vessel wall without fins or the like bending which would make insertion more difficult and which also pose a risk of leakage if they become split or buckled during assembly.

Preferably the seal is shaped to fit over a peripheral rim of the heater plate. The rim could for example be formed with a lip.

Conveniently in such above arrangements but also preferred more generally is that the seal is provided in a liquid heating vessel in which securing means are arranged to bear on the seal. This is beneficial in providing thermal isolation between the heater and the securing means. Most preferably the securing means comprises a clip member comprising a plurality of radially extending fingers, the clip member having an initial configuration in which it is dished in its overall profile and being deformable to an engaging configuration in which said initial dished profile is reduced or reversed so as to increase the radial extent of said fingers. However this is not essential - instead a base cover for the vessel could be used to secure the heater.

Thus it will be seen by those skilled in the art that in accordance with some preferred embodiments the heater is secured by a clip member in which the radial fingers will be caused to project further radially as the clip is deformed away from its dished profile - i.e. as it tends towards being flattened. This provides a highly beneficial arrangement since only relatively little force needs to be applied to the central region of the clip member to extend the fingers - e.g. to engage with suitable slots or other features on the vessel body - thereby securing the heater.

The clip member could be arranged so that it maintains the engaged configuration by itself - i.e. it could be bistable. For example it may be allowed to reverse its curvature to some extent. In preferred embodiments however the clip member is held in the engaging configuration. This could for example be through a connection with a formation on the heater itself such as a boss or a control unit attached to the heater; but preferably the clip member is held in the engaging configuration by a separate member attached to the vessel wall, most preferably a base cover for the vessel.

The clip member could be in the form of a split ring, but preferably it forms a closed loop of material. This helps maximise its strength. In presently preferred embodiments the fingers are arranged in pairs connected to each other - e.g. by arcuate web portions. In such embodiments the closest members of adjacent pairs are preferably connected to each other e.g. by second arcuate web portions. This gives an arrangement that whilst forming a closed loop of material, has no continuous annulus. This facilitates the dishing and reduction of dishing required by the invention.

The clip member is preferably made from plastics although any suitably resilient material could be used - e.g. metal.

Where in the foregoing reference is made to contact with or attachment to the vessel body it should be appreciated that direct contact with a the vessel wall is not required. An intermediate member could equally be provided.

Certain preferred embodiments of the invention will now be described, by way of example only, with reference to the accompanying drawings in which:
Fig. 1a. is a plan view of a clip member for use in an embodiment of the invention;
Fig. 1b is a side elevation of the clip member of Fig. 1a;
Fig. 2 is an enlarged sectional view of a seal member in accordance with the invention;
Fig. 3 is a partial sectional view of a heater plate fitted in a vessel using the clip of Fig. 1a,b and the seal of Fig. 2;
Fig. 4 is a view similar to Fig. 3 of a second embodiment employing a different securing method;
Fig. 5 is a sectioned perspective view of a further seal in accordance with the invention;
Fig. 6 is a sectional view of the seal of Fig. 5 assembled in a vessel; and
Fig. 7. is a sectional view of another seal installed in a vessel in accordance with the invention.

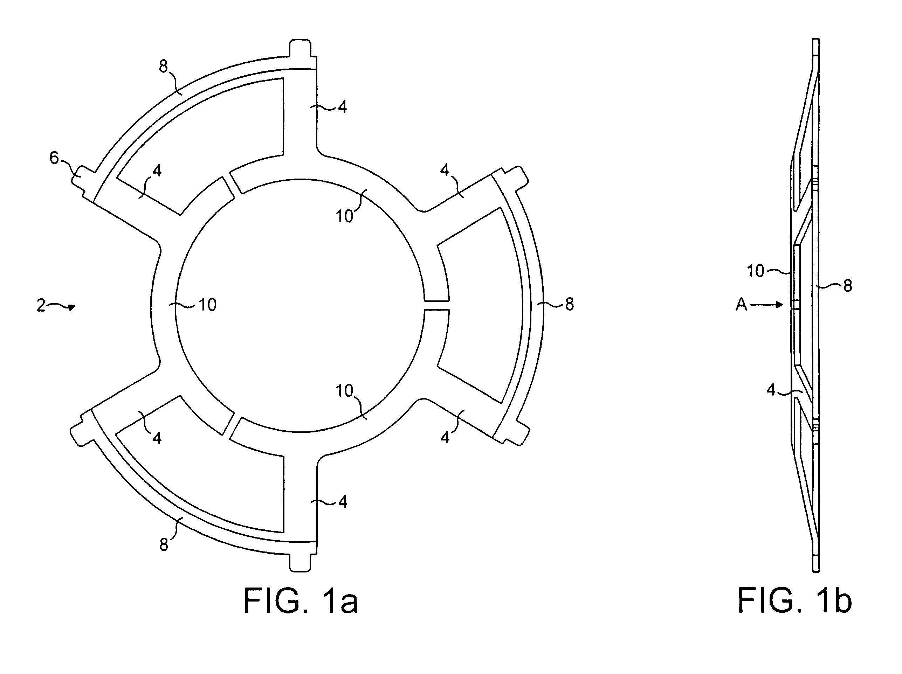

Turning firstly to Fig. 1 there may be seen a clip member 2 in accordance with the invention. This is made of a moderately heat resistant plastic. As will be seen from the plan view of Fig. 1 a the clip member has six radially extending fingers 4, each terminating in a narrowed tab 6. The fingers are connected in pairs by arcuate web portions 8. The radially inner ends of the fingers 4 are connected by second, inner arcuate webs 10 so that the nearest members of adjacent of the aforementioned pairs are connected. The inner arcuate webs 10 form a broken annulus.

As will be appreciated from the side elevation of Fig. 1b, the clip member 2 is dished out of being planar so that the inner webs 10 are axially offset from the outer webs 8. The clip member is shaped, e.g. moulded, so as to have this natural shape. However if pressure is applied to the inner webs 10 as is shown by the arrow A, the member will deform towards the planar, thereby causing the fingers 4 to spread out - i.e. increase their radial extent. By sizing the clip member such that the tabs 6 just gently click into corresponding slots or a groove in the vessel body, the clip member may be easily clicked in to retain a heater plate and thereafter axial pressure applied to spread the fingers and so push the tabs 6 fully into the recesses/groove, thereby locking the heater in position.

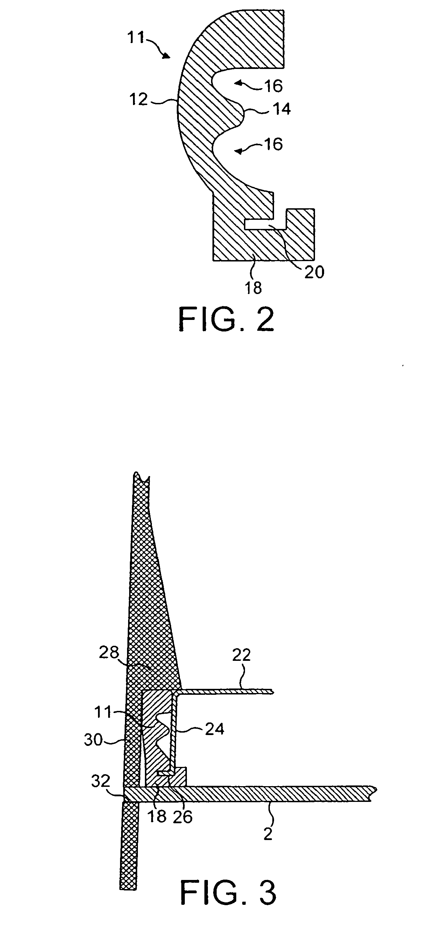

Turning now to Fig. 2 there may be seen a section through an annular seal 11 in accordance with a second aspect of the invention. The sectional profile is approximately C-shaped with a smooth, curved outer surface 12 and a contoured inner surface 14 comprising two vertically spaced annular channels 16. Below the C-shaped part of the profile is a base portion 18 which includes an L-shaped slot 20 into which a corresponding lip on the rim of the heater plate is fitted.

Assembly of a liquid heating vessel incorporating the clip member 2 of Figs. 1a and 1b and the seal of Fig. 2 will now be described with reference to Fig. 3 which is a partial sectional view of the assembled vessel. It will be seen that that heater plate 22 has a generally planar central region and a vertically extending flange 24 terminated at the rim by an outwardly projecting lip 26. The first assembly step is to fit the seal 11 to the heater pate 22. This is done by fitting the base section 18 over the peripheral lip 26 of the heater so that it is received in the corresponding L -shaped channel 20. The upper, C-shaped part of the seal is a stretch fit over the vertical flange 24 so that the seal surface is in contact with the flange in three places. This causes some flattening of the curved outer surface 12.

The heater and seal assembly is then inserted from beneath into the body of a liquid heating vessel such as a jug or kettle which is open at the bottom, until the heater 22 abuts a circumferentially spaced series of circular abutments 28. Instead of discrete abutments, a continuous ridge can perform the same function. The smooth other surface of the seal 12 enables the assembly to be inserted without tearing or buckling of the seal. The gap between the vertical flange of the heater 24 and the vessel wall 30 is such that the seal is further slightly radially compressed thereby ensuring a watertight seal even when the vessel wall 30 and heater 22 expand by differing amounts during heating. The annular channels 16 facilitate compression of the seal.

To hold the heater 22 in place the clip member 2 of Fig. 1 is used. This is shown schematically in Fig. 3. Firstly the clip member 2 is placed into the underneath of the vessel after the heater and down onto the base portion 18 of the annular seal (the vessel is inverted for assembly). It will be observed as a result that there is no direct contact between the heater plate 22 and the clip member 2. The tabs 6 on the ends of the fingers 4 are located and gently clipped into slots 32 in the vessel wall 30 spaced around its circumference. This locates the heater temporarily. To secure the heater permanently, a base cover (not shown) is fitted to the bottom of the vessel. This has suitable protrusions which bear on the inner arcuate webs 10 (see Fig. 2) of the clip member, flattening it and so causing the fingers to spread out and lock the clip member 2 and heater 22 in position. Alternatively the clip member could be secured to another structure such as the heater plate, a control unit; or it could be self-locking.

If required, disassembly is just as easy. The base cover is simply removed which allows the clip member to resile to its natural state it can then be easily removed, allowing the heater and seal assembly to be withdrawn.

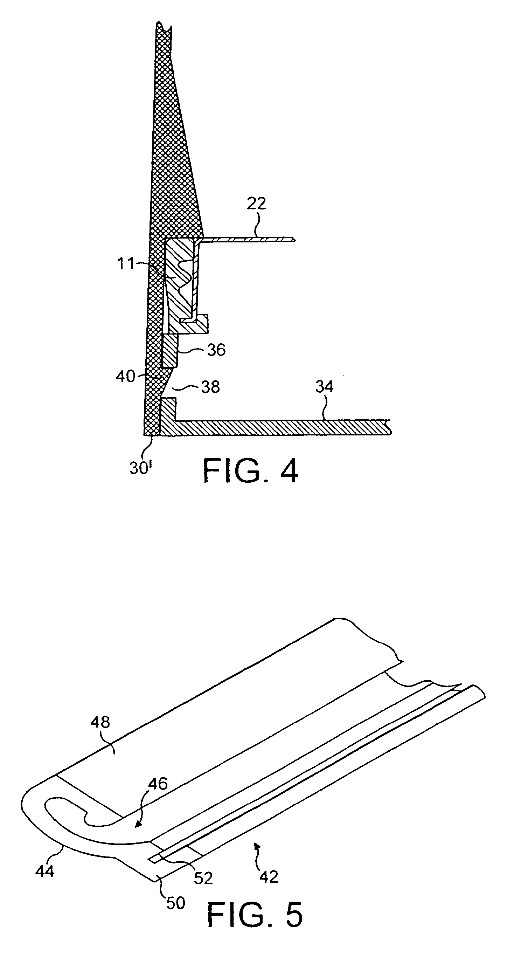

A second embodiment of the invention is shown in Fig. 4. In this embodiment the heater plate and seal are the same as described with regard to the first embodiment. However instead of using a clip member of the type shown in Fig. 1, the heater is secured directly by means of a base cover 34. The base cover 34 has a peripherally upstanding flange 36 with a series of circumferentially spaced slots 38. As the cover is pushed into the lower end of the vessel wall 30' the upper edge of the base cover flange presses onto the bottom of the seal 11 and the slots 38 locate over triangular ledges 40 to lock the cover 34 into position.

Fig. 5 shows another embodiment of the seal. In this Figure the seal 42 is shown opened out straight for ease of understanding. In practice however it is a continuous annular form. In common with the seal described previously, this seal 42 has a curved outer surface 44 and an annular channel 46 on its inner surface. However in this embodiment the channel 46 has a re-entrant profile so that it continues round and up into the seal so as to define a depending skirt portion 48 which forms the majority of the inner face of the seal. The bottom part of the seal 50 is flat underneath and defines a channel 52 for receiving the peripheral lip of a heater plate.

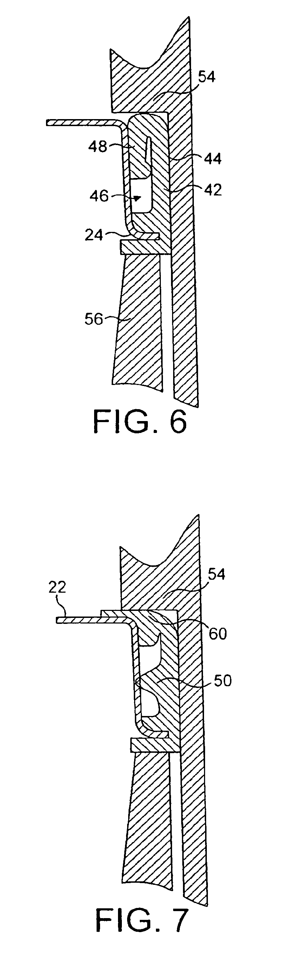

Fig. 6 shows the seal 42 installed in vessel - although it should be noted that Fig. 6 shows a section of the right hand part of the vessel. As in previous embodiments the seal 42 is fitted around an outwardly facing, approximately horizontal surface 24 of the heater plate and is retained against an internal protrusion 54 from the vessel wall by a retaining member 56, shown schematically. This could be a clip member as previously described, a base cover or any other suitable arrangement.

It will be seen that in the installed state the outer face or the seal 44 is compressed against the vessel wall and that the skirt portion 48 is deformed inwardly to press against the outer wall of the seal and so close the re-entrant part of the channel 46. Thus the seal is sufficiently compressible to allow it to be inserted into the vessel and in particular it presents a smooth profile to the vessel wall during the insertion process. Nonetheless a reliable watertight seal is still obtained even in the face of expansion of the gap between the heater plate and the vessel wall in which the seal lies.

Finally Fig. 7 is a view similar to Fig. 6 showing another embodiment of a seal. This seal 58 is similar to that shown in Figs. 2 and 3 except that its upper edge 60 is shaped to extend a short distance over the top, flat surface of the heater plate 22. This means that the upper portion of the seal is interposed between the heater plate and the vessel wall protrusion 54 against which the heater is secured. This maximises thermal insulation between the heater plate and the vessel wall.

## Claims

1. A liquid heating vessel comprising a plate heater (22) and an annular seal (11;42;50) sealing the heater (22) to the vessel body (30), said heater (22) having a vertically extending flange (24), and **characterised in that** said seal (11;42;50) has a cross-sectional profile including at least one annular channel (16;46) on the radially inward surface (14) facing the flange (24).

2. A vessel as claimed in claim 1, wherein the outwardly facing surface (12) of the seal (11;42;50) is substantially smooth such that it moves over a vessel wall (30) without fins or the like bending upon insertion.

3. A vessel as claimed in claim 1 or 2, wherein the seal (11;42;50) is shaped to fit over a peripheral rim (26) of the heater plate (22).

4. A vessel as claimed in claim 1, 2 or 3, wherein the cross-sectional profile of the seal (11;42;50) is approximately C-shaped.

5. A vessel as claimed in claim 1, 2 or 3, wherein the channel (46) has a re-entrant profile.

6. A vessel as claimed in any preceding claim, further comprising means (2;36;56) for securing said heater (22), said securing means being arranged to bear on the seal (11;42;50).

7. A vessel as claimed in claim 6, wherein the securing means (56) comprises a base cover for the vessel.

8. A vessel as claimed in claim 6 wherein the securing means comprises a clip member (2), said clip member (2) comprising a plurality of radially extending fingers (4), the clip member (2) having an initial configuration in which it is dished in its overall profile and being deformable to an engaging configuration in which said initial dished profile is reduced or reversed so as to increase the radial extent of said fingers (4).

9. A vessel as claimed in claim 8 wherein the clip member (2) forms a closed loop of material.

10. A vessel as claimed in claim 8 or 9 wherein the fingers (4) are arranged in pairs connected to each other.

## Patentansprüche

1. Flüssigkeit-Aufheizgefäß, das eine Plattenheizvorrichtung (22) und eine ringförmige Dichtung (11; 42; 50) umfasst, die die Heizvorrichtung (22) am Gefäßkörper (30) abdichtet, wobei die Heizvorrichtung (22) einen vertikal verlaufenden Flansch (24) aufweist, **dadurch gekennzeichnet, dass** die Dichtung (11; 42; 50) ein Querschnittsprofil aufweist, das wenigstens einen ringförmigen Kanal (16; 46) auf der radial nach innen weisenden Oberfläche (14), die dem Flansch (24) zugewandt ist, aufweist.

2. Gefäß nach Anspruch 1, wobei die nach außen weisende Oberfläche (12) der Dichtung (11; 42; 50) im Wesentlichen glatt ist, so dass sie sich über eine Gefäßwand (30) bewegt, ohne dass sich beim Einsetzen Lamellen oder dergleichen verbiegen.

3. Gefäß nach Anspruch 1 oder 2, wobei die Dichtung (11; 42; 50) so geformt ist, dass sie über einen Umfangsrand (26) der Heizvorrichtungsplatte (22) passt.

4. Gefäß nach Anspruch 1, 2 oder 3, wobei das Querschnittsprofil der Dichtung (11; 42; 50) näherungsweise C-förmig ist.

5. Gefäß nach Anspruch 1, 2 oder 3, wobei der Kanal (46) ein Wiedereintrittsprofil aufweist.

6. Gefäß nach irgendeinem der vorangehenden Ansprüche, ferner Mittel (2; 36; 56) zum Befestigen der Heizvorrichtung (22) umfassend, wobei die Befestigungsmittel so angeordnet sind, dass sie auf der Dichtung (11; 42; 50) aufliegen.

7. Gefäß nach Anspruch 6, wobei die Befestigungsmittel (56) eine Basisabdeckung für das Gefäß umfassen.

8. Gefäß nach Anspruch 6, wobei die Befestigungsmittel ein Klammerelement (2) umfassen, wobei das Klammerelement (2) mehrere radial verlaufende Finger (4) umfasst, und wobei das Klammerelement (2) eine Anfangskonfiguration aufweist, in der es in seinem Gesamtprofil gewölbt ist und zu einer Eingriffskonfiguration verformbar ist, in der das anfänglich gewölbte Profil reduziert oder invertiert wird, um somit die Radialausdehnung der Finger (4) zu erhöhen.

9. Gefäß nach Anspruch 8, wobei das Klammerelement (2) eine geschlossene Materialschleife bildet.

10. Gefäß nach Anspruch 8 oder 9, wobei die Finger (4) in miteinander verbundenen Paaren angeordnet sind.

## Revendications

1. Récipient de chauffage de liquide comprenant une plaque chauffante (22) et une garniture d'étanchéité annulaire (11 ; 42 ; 50) réalisant l'étanchéité entre la plaque chauffante (22) et le corps (30) du récipient, ladite plaque chauffante (22) comportant un rebord (24) qui s'étend verticalement, et **caractérisé en ce que** ladite garniture d'étanchéité (11 ; 42 ; 50) a un profil en coupe transversale qui inclut au moins un canal annulaire (16 ; 46) sur la surface radialement intérieure (14) qui est dirigée vers le rebord (24).

2. Récipient selon la revendication 1, dans lequel la surface (12), dirigée vers l'extérieur, de la garniture d'étanchéité (11 ; 42 ; 50) est sensiblement lisse de sorte qu'elle vient par-dessus une paroi de récipient (30) sans que des nervures ou analogues se courbent au moment de l'insertion.

3. Récipient selon la revendication 1 ou 2, dans lequel la garniture d'étanchéité (11 ; 42 ; 50) est conformée de façon à s'adapter par-dessus un rebord périphérique (26) de la plaque chauffante (22).

4. Récipient selon la revendication 1, 2 ou 3, dans lequel le profil en coupe transversale de la garniture d'étanchéité (11 ; 42 ; 50) a approximativement la forme d'un C.

5. Récipient selon la revendication 1, 2 ou 3, dans lequel le canal (46) a un profil rentrant.

6. Récipient selon l'une quelconque des revendications précédentes, comprenant en outre des moyens (2 ; 36 ; 56) permettant de fixer ladite plaque chauffante (22), lesdits moyens de fixation étant disposés de façon à s'appuyer sur la garniture d'étanchéité (11 ; 42 ; 50).

7. Récipient selon la revendication 6, dans lequel le moyen de fixation (56) comprend un capot de base destiné au récipient.

8. Récipient selon la revendication 6, dans lequel le moyen de fixation comprend un élément de pincement (2), ledit élément de pincement comprenant une pluralité de doigts (4) qui s'étendent radialement, l'élément de pincement ayant une configuration initiale, dans laquelle il a un profil général incurvé, et étant apte à se déformer pour prendre une configuration d'engagement dans laquelle ledit profil incurvé initial est réduit ou inversé de manière à augmenter l'extension radiale desdits doigts (4).

9. Récipient selon la revendication 8, dans lequel l'élément de pincement (2) forme une boucle de matière fermée.

10. Récipient selon la revendication 8 ou 9, dans lequel les doigts (4) sont disposés par paires reliées entre elles.
